# EUROPEAN PATENT APPLICATION

(11) **EP 2 884 470 A1**
(43) Date of publication of application: **17.06.2015**
(21) Application number: 14196633.3
(22) Date of filing: 05.12.2014
(51) Int. Cl.: G07F 7/08, G06Q 20/34

(54) **Mobile payment terminal device**

(30) Priority: 11.12.2013 JP 2013255546; 11.12.2013 JP 2013255547; 11.12.2013 JP 2013255548; 11.12.2013 JP 2013255549
(71) Applicant: Panasonic Intellectual Property Management Co., Ltd., Osaka-shi, Osaka 540-6207 (JP)
(72) Inventor: Matsumoto, Manabu, Osaka, 540-6207 (JP); Nakashima, Yoshihide, Osaka, 540-6207 (JP); Shimoda, Seiro, Osaka, 540-6207 (JP)
(74) Representative: Eisenführ Speiser

(57) **Abstract**

There are provided a display unit that performs a display prompting an operation of reading a medium, a reading unit that reads the medium, a secure input unit that enables an input of authentication information required for authentication of the medium, and a secure display unit that performs a display, which enables an input of the authentication information required for authentication of the medium through the secure input unit, in association with an input through the secure input unit.

## Description

### BACKGROUND OF THE INVENTION

### 1. Field of the Invention

The present invention relates to a mobile payment terminal device used for payment or business transactions.

### 2. Description of the Related Art

In credit transactions using a credit card or the like, the security of transactions is ensured by checking (identifying) whether or not a person who performs a transaction matches the owner of the credit card used for the transaction. This identification is performed in such a manner that a customer signs a transaction slip, on which the content of the transaction is printed and which is output at the time of processing of the transaction, and a clerk visually compares the signature with a signature written on the credit card.

Incidentally, when a payment terminal is located far from the customer, a time for which the clerk keeps the card of the customer becomes long. For this reason, customer service is degraded, or the customer feels uneasy. Since the time required for the clerk to complete the payment becomes long, the time for which the clerk is devoted to sales activities has been decreased.

As the measures to solve the problems, a transaction terminal device has been proposed in which a signature input unit is provided and the signature entered by the customer on the signature input unit is displayed on a display unit (for example, refer to Japanese Patent Unexamined Publication No. 2003-16536). The transaction terminal device is a mobile terminal, and payment processing and signing by the customer are performed at the same place.

In recent years, such a terminal device allowing the input and display of the signature has been realized in the form of a smartphone or a tablet computer. A large number of these terminals have been distributed for general consumers. Accordingly, it is possible to construct a payment system at a low cost.

However, there is a disadvantage in that these information terminals, which are designed on the assumption that the information terminals are used by general consumers, do not have "tamper resistance" that is required as a payment terminal in order to protect customer information and perform transactions safely. The "tamper resistance" refers to resistance to attacks to steal information from the terminal.

### SUMMARY OF THE INVENTION

The present disclosure is to provide a mobile payment terminal device that allows the input and display of authentication information (a signature or a personal identification number (PIN)) of a card used for payment while ensuring the "tamper resistance".

The present disclosure is to provide an easy-to-use mobile payment terminal device that allows the input of a plurality of pieces of authentication information.

A mobile payment terminal device of the present disclosure includes: a display unit that performs a display prompting an operation of reading a medium; a reading unit that reads the medium; a secure input unit that enables an input of authentication information required for authentication of the medium; and a secure display unit that performs a display, which enables an input of the authentication information required for authentication of the medium through the secure input unit, in association with an input through the secure input unit.

A mobile payment terminal device of the present disclosure includes: a non-secure information processing unit including a display unit that is housed in a housing and that displays information regarding payment including an amount and performs a display prompting an operation of reading a medium used for payment; a reading unit that reads the medium; a secure input unit that enables an input of authentication information used for payment; and a secure display unit that performs a display, which enables an input of the authentication information required for authentication of the medium through the secure input unit, in association with an input through the secure input unit. The authentication information corresponding to a plurality of different authentication methods is input through the secure input unit.

In the mobile payment terminal device of the present disclosure, the secure display unit may perform switching between a plurality of display contents corresponding to authentication methods of the medium.

The mobile payment terminal device of the present disclosure may be formed by a first information processing device including the display unit and a second information processing device that is able to be combined with the first information processing device and includes the secure input unit and the secure display unit.

### BRIEF DESCRIPTION OF DRAWINGS

FIG. 1A is a front external view of a payment terminal device according to the present embodiment;
FIG. 1B is a side external view of the payment terminal device according to the present embodiment;
FIG. 2 is a drawing showing the separation state of the payment terminal device according to the present embodiment;
FIG. 3 is a diagram showing the configuration of the payment terminal device according to the present embodiment;
FIG. 4A is a diagram showing an example of the arrangement of a reading antenna of a non-contact type IC card;
FIG. 4B is a diagram showing another example of the arrangement of a reading antenna of the non-contact type IC card;
FIG. 5A is a diagram showing an example of a display screen showing a reading position of a magnetic stripe card;
FIG. 5B is a diagram showing an example of a display screen showing a placing position of the non-contact type IC card;
FIG. 5C is a diagram showing an example of a display screen showing an insertion position of the contact type IC card;
FIG. 5D is a diagram showing an example of a display screen showing the insertion position of the contact type IC card;
FIG. 6A is a diagram showing an example of a screen where a guide mark for guiding the reading position corresponding to each of the magnetic stripe card and the contact type IC card and a guide mark for switching to a readable state of the non-contact type IC card are displayed at the same time;
FIG. 6B is a diagram showing an example of a screen displayed after the inside of the dotted frame displaying "tap here for the non-contact type IC card" is touched by the operator;
FIG. 6C is a diagram showing an example of a screen where a guide mark for guiding the reading position corresponding to each of the magnetic stripe card and the contact type IC card and a guide mark for switching to a readable state of the non-contact type IC card are displayed at the same time;
FIG. 6D is a diagram showing an example of a screen displayed after the inside of the dotted frame displaying "tap here for the non-contact type IC card" is touched by the operator;
FIG. 7A is a diagram showing an example of a display screen for making the user of the card used for payment enter the signature;
FIG. 7B is a diagram showing an example of a display screen for making the user of the card used for payment enter the signature;
FIG. 7C is a diagram showing an example of a display screen for making the user of the card used for payment enter the signature;
FIG. 7D is a diagram showing an example of a display screen for making the user of the card used for payment enter a PIN;
FIG. 8 is a diagram showing an example of the payment process flow in a payment terminal device;
FIG. 9 is a diagram showing an example of the more detailed process flow for the processing and display prompting the operation of reading the card used for payment and the reading of the card;
FIG. 10 is a diagram showing an example of the more detailed process flow for the processing and display prompting the operation of reading the card used for payment and the reading of the card;
FIG. 11 is a diagram showing an example of the more detailed process flow for the display and input regarding the PIN; and
FIG. 12 is a diagram showing an example of the more detailed process flow for the display and input regarding the signature.

### DETAILED DESCRIPTION OF THE PREFERRED EMBODIMENTS

Hereinafter, a payment terminal device according to an embodiment of the present disclosure will be described with reference to the accompanying drawings.

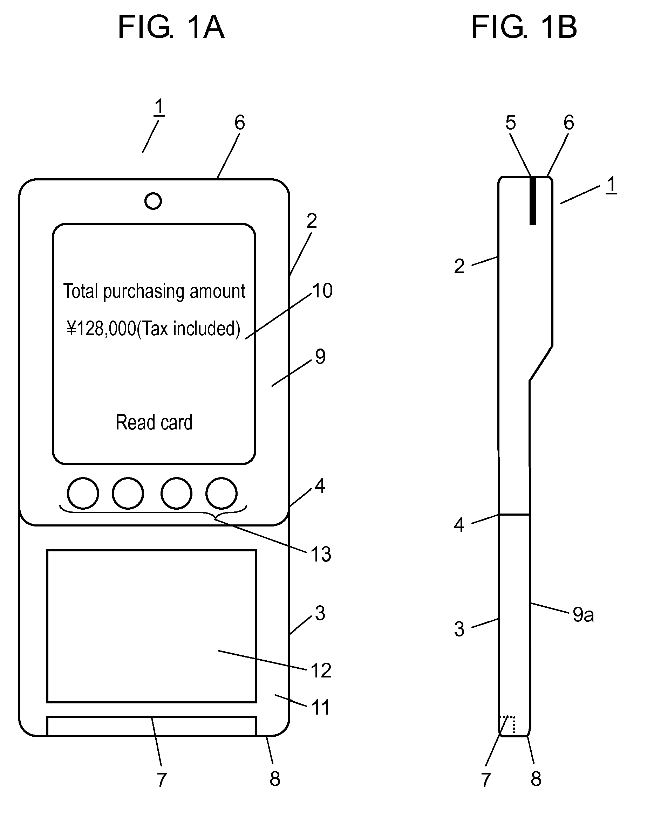

FIG. 1A is a front external view of the payment terminal device according to the present embodiment, and FIG. 1B is a side external view of the payment terminal device according to the present embodiment. Payment terminal device 1 according to the present embodiment is of a mobile type, and is configured to include first information processing unit 2 and secure second information processing unit 3. Secure, when referred to herein, means having tamper resistance required for the payment terminal device.

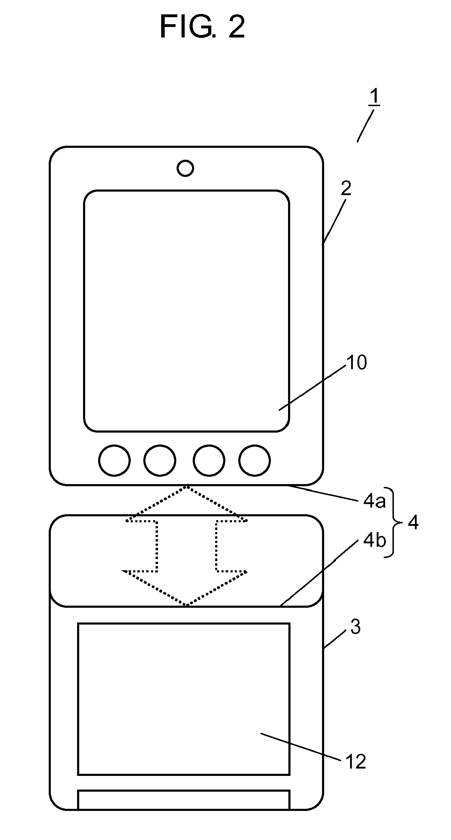

FIG. 2 is a drawing showing the separation state of the payment terminal device according to the present embodiment. In payment terminal device 1 according to the present embodiment, first information processing unit 2 and second information processing unit 3 are housed in respective housings, and can be combined with each other on combination surface 4. However, in the present disclosure, the two information processing units may not be able to be separated from each other. First information processing unit 2 may or may not be configured securely.

Payment terminal device 1 shown in FIGs. 1A and 1B includes slit 5, which is a path for reading the magnetic stripe by sliding the magnetic stripe card, on upper surface 6 of first information processing unit 2. Slit 5 does not necessarily need to be provided in first information processing unit 2, and may be provided in second information processing unit 3. Payment terminal device 1 includes insertion slot 7 for reading the contact type IC card on lower surface 8 of second information processing unit 3. Payment terminal device 1 includes loop antenna 38 for reading the non-contact type IC card. The arrangement of loop antenna 38 will be described later.

In addition to these, payment terminal device 1 according to the present embodiment includes two input/display units, that is, a touch panel. First touch panel 10 is provided on front surface 9 of first information processing unit 2, and second touch panel 12 is provided on front surface 11 of second information processing unit 3.

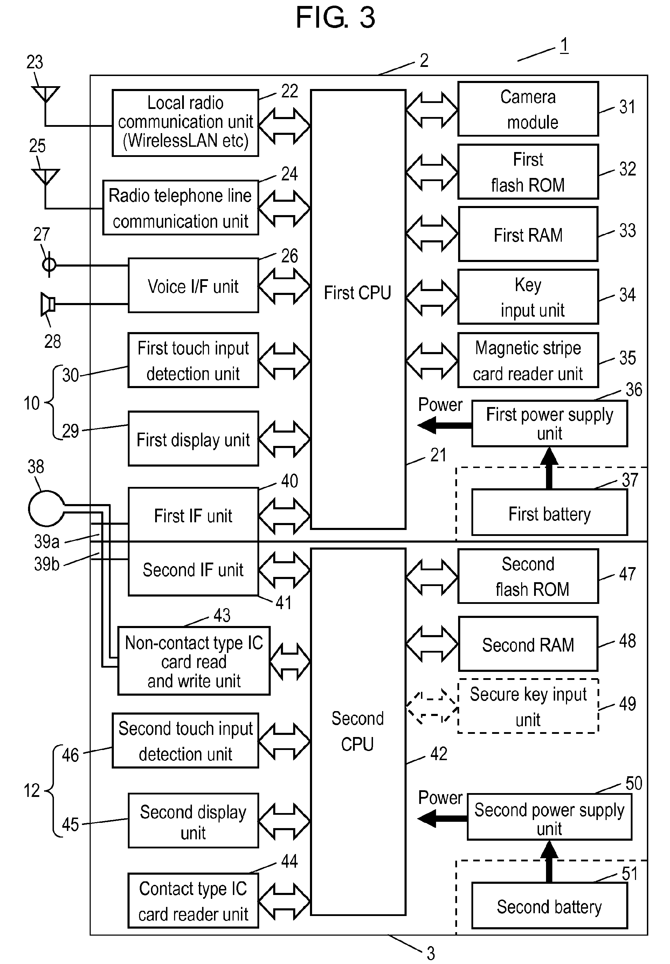

FIG. 3 is a diagram showing the configuration of the payment terminal device according to the present embodiment. First information processing unit 2 of payment terminal device 1 includes first CPU 21. Various kinds of components are connected to first CPU 21. Local radio communication unit 22 is connected to local radio communication antenna 23, and has a function of performing, for example, wireless LAN communication using a local radio communication channel (not shown) (local radio communication unit 22 may be Bluetooth (registered trademark) and others). Radio telephone line communication unit 24 is connected to radio telephone antenna 25, and has a function of performing communication using radio telephone lines (for example, mobile phone lines, such as W-CDMA, UMTS, CDMA2000, and LTE) that are not shown.

Voice input/output unit 26 is connected to microphone 27 and speaker 28, and has a function of controlling the input and output of voice. Thus, by radio telephone line communication unit 24, communication with other mobile phones or fixed-line phones becomes possible. Speaker 28 is also used to emit sound for calling the user's attention or to emit warning sound indicating an operation error when the user operates payment terminal device 1.

First display unit 29 has a function of controlling the display of first touch panel 10 (refer to FIGs. 1A and 1B). First touch input detection unit 30 has a function of detecting a touch input with respect to first touch panel 10. Camera module 31 has a function of performing imaging by controlling a camera. Although no camera is shown in FIGs. 1A and 1B, a camera may be provided, for example, on the back surface of first information processing unit 2 located on the opposite side to front surface 9 of first information processing unit 2 on which first touch panel 10 is provided. Using camera module 31 and a bar code scanner unit (not shown), it is possible to scan a bar code or a QR Code (registered trademark) to decode the content.

In FIG. 3, first flash ROM 32 has a function of storing various kinds of data. The stored data may be data relevant to work, or may be a program for controlling payment terminal device 1 (mainly, first information processing unit 2). First RAM 33 is a memory that is used to temporarily store the processed data generated during the arithmetic processing according to the operation of payment terminal device 1 (mainly, first information processing unit 2), for example. Key input unit 34 has a function of receiving an input from input key 13 shown in FIGs. 1A and 1B. Magnetic stripe card reader unit 35 shown in FIG. 3 is disposed inside slit 5 in FIGs. 1A and 1B, and has a function of reading the magnetic stripe of the magnetic stripe card.

First power supply unit 36 is the main power source of first information processing unit 2, and receives the supply of electric power from first battery 37 and supplies electric power to each unit of first information processing unit 2 including first CPU 21. First CPU 21 can supply electric power to some or all of the circuits, which form first information processing unit 2, or stop the supply by controlling first power supply unit 36. First CPU 21 can supply electric power to second information processing unit 3 by controlling first power supply unit 36.

Although payment terminal device 1 has a function of reading the non-contact type IC card as described above, loop antenna 38 for reading the non-contact type IC card is disposed in first information processing unit 2. First information processing unit 2 and second information processing unit 3 are connected to each other through antenna connection units 39a and 39b, first interface unit (hereinafter, referred to as "first IF unit") 40, and second interface unit (hereinafter, referred to as "second IF unit") 41, and transmission and reception of various kinds of data or commands between first information processing unit 2 and second information processing unit 3 are performed. In the present embodiment, antenna connection units 39a and 39b and first and second IF units 40 and 41 can be combined with each other. Antenna connection units 39a and 39b may be treated as parts of first and second IF units 40 and 41, respectively. Antenna connection unit 39a and first IF unit 40 may be integrated, and antenna connection unit 39b and first IF unit 40 may be integrated.

Second information processing unit 3 of payment terminal device 1 includes second CPU 42. Various kinds of components are connected to second CPU 42. Non-contact type IC card read and write unit 43 is connected to loop antenna 38, which is disposed in second information processing unit 3, through antenna connection units 39a and 39b, and has a function of reading the non-contact type IC card. Contact type IC card reader unit 44 has a function of reading the card information from the electrode of the contact type IC card inserted in insertion slot 7 (refer to FIGs. 1A and 1B). Second display unit 45 has a function of controlling the display of second touch panel 12 (refer to FIGs. 1A and 1B). Second touch input detection unit 46 has a function of detecting a touch input with respect to second touch panel 12.

Second flash ROM 47 has a function of storing various kinds of data. The stored data may be data relevant to work, or may be a program for controlling payment terminal device 1 (mainly, second information processing unit 3). Second RAM 48 is a memory that is used to temporarily store the processed data generated during the arithmetic processing according to the operation of payment terminal device 1 (mainly, second information processing unit 3), for example. Second information processing unit 3 may include a secure key input unit 49 having physical keys mainly for entering a personal identification number (PIN). Although not shown in FIGs. 1A, 1B, and 2, secure key input unit 49 may be disposed, for example, on back surface 9a (surface of second information processing unit 3 located on the opposite side of front surface 9 (display surface)) of second information processing unit 3 in FIGs. 1A and 1B.

In FIG. 3, second power supply unit 50 is the main power source of second information processing unit 3, and receives the supply of electric power from second battery 51 and supplies electric power to each unit of second information processing unit 3 including second CPU 42. Second CPU 42 can supply electric power to some or all of circuits, which form second information processing unit 3, or stop the supply by controlling second power supply unit 50. Second CPU 42 can supply electric power to first information processing unit 2 by controlling second power supply unit 50.

Payment terminal device 1 configured as described above has the following features.

As described above in FIG. 2, in the present embodiment, first information processing unit 2 and second information processing unit 3 can be combined with each other. As shown in FIG. 3, first information processing unit 2 includes first touch panel 10 (refer to FIGs. 1A, 1B, and 2) including both first display unit 29 and first touch input detection unit 30 ("first input unit"). First information processing unit 2 includes first IF unit ("first input/output interface") through which various kinds of data, commands, signals, and the like can be input and output to and from other information processing devices. First information processing unit 2 includes radio telephone line communication unit 24 or local radio communication unit 22 ("external input/output interface") through which communication with the outside (for example, the payment center) can be performed.

If first information processing unit 2 is an information terminal that is distributed in great quantities for general consumers, such as a smartphone or a tablet computer, the terminal itself can be inexpensively supplied. Since the development platform of application software that is used for payment or other work is widely used, reuse or diversion of development assets is easy. First information processing unit 2 using such an information terminal for general consumers has high processing capacity able to record and play back a video without difficulty. Accordingly, it is possible to smoothly operate application software used for payment or other work. However, such an information terminal for general consumers does not have "tamper resistance" required for the payment terminal to protect customer information and perform transactions safely.

Second information processing unit 3 in the present embodiment includes second IF unit ("second input/output interface") through which various kinds of data, commands, signals, and the like can be input and output to and from first information processing device 2. Second information processing unit 3 includes second touch panel 12 (refer to FIGs. 1A, 1B, and 2) including both second display unit 45 and second touch input detection unit 46 ("second input unit"). Second IF unit can be combined with the first IF unit provided in first information processing unit 2. Through such a configuration, first information processing unit 2 that is not secure can be combined with secure second information processing unit 3.

In the configuration described above, the input and display of the authentication information of the card used for payment, such as the signature or PIN information of the card, are performed on the second touch panel provided in secure second information processing unit 3. Therefore, in payment terminal device 1, it is possible to enter and display the authentication information of the card used for payment while ensuring the "tamper resistance". A secure unit that requires the "tamper resistance" is provided in second information processing unit 3. As first information processing unit 2, an information terminal distributed in great quantities for general consumers, such as a smartphone or a tablet computer, is used. Payment schemes have been diversified with the addition of a contact type IC card, a non-contact type IC card, and electronic money to the magnetic stripe card that has been used for payment in the past. With the addition of new payment schemes, the development cost or the price of payment terminal device 1 has increased. According to the configuration described above, the increase in the development cost or the price of the payment terminal device 1 is minimized. In first information processing unit 2, a general-purpose operating system (OS) is adopted as software platform. Therefore, reuse or modification of the application software for payment (hereinafter, referred to as "payment application") and application software used for other work (hereinafter, referred to as "work application") becomes easy. In addition to this, a payment application and other work applications operate smoothly without causing difficulty in first information processing unit 2 having a high processing capacity.

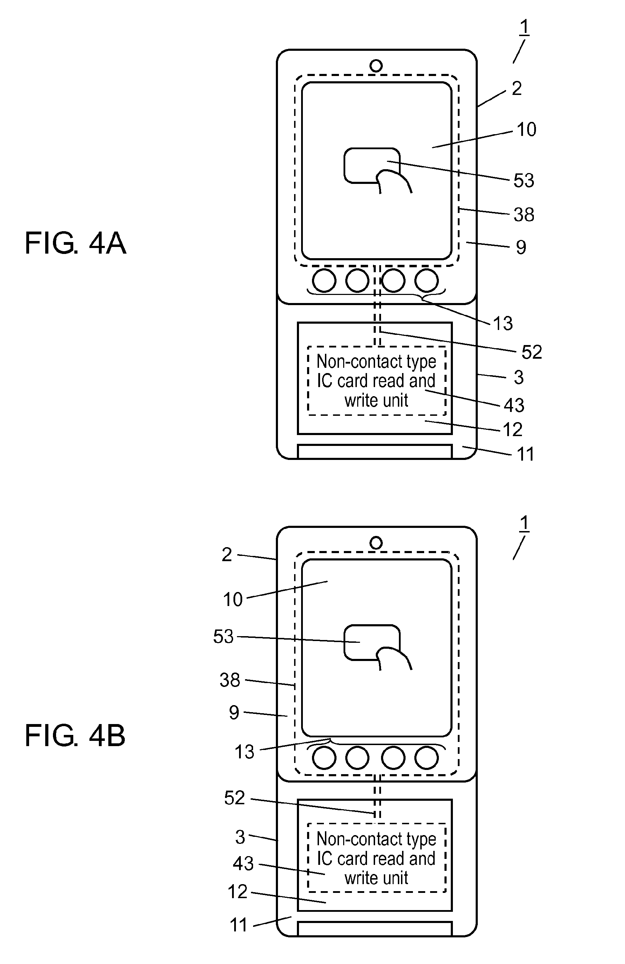

FIG. 4A is a diagram showing an example of the arrangement of the reading antenna of the non-contact type IC card, and FIG. 4B is a diagram showing another example of the arrangement of the reading antenna of the non-contact type IC card. As shown in FIGs. 4A and 4B, in payment terminal device 1, loop antenna 38 (refer to FIG. 3) that is an antenna for reading the non-contact type IC card (non-contact type medium) is disposed in first information processing unit 2 on the non-secure side (that is, on the side that is not secure). FIG. 4B is different from FIG. 4A in that input key 13 is disposed inside the loop antenna 38 when viewed from the side of front surface 9 (display surface of first touch panel 10) of first information processing unit 2. However, in both FIGs. 4A and 4B, in first information processing unit 2, loop antenna 38 is disposed so as to surround the periphery of first touch panel 10 having a large display area. On the other hand, read and write unit 43 of the non-contact type IC card ("non-contact type medium reading unit"; refer to FIG. 3) is disposed in second information processing unit 3 on the secure side. Non-contact type IC card read and write unit 43 is connected to loop antenna 38, which is disposed in second information processing unit 3, through antenna connection units 39a and 39b (refer to FIG. 3). Although antenna connection units 39a and 39b are omitted in FIGs. 4A and 4B, a portion connecting non-contact type IC card read and write unit 43 and loop antenna 38 to each other is referred to as connection unit 52.

In the future, it is expected that payment using the non-contact type IC card will increase with replacement of the magnetic stripe card or the contact type IC card. In the payment using the non-contact type IC card, reading performance based on the non-contact communication that has not been required for contact type card reading up to now should also be ensured simultaneously with the tamper resistance. Along with that, the operability of payment terminal device 1 itself also needs be easier.

According to the configuration described above, the tamper resistance of payment terminal device 1 according to the present embodiment is ensured. The non-contact type IC card read and write unit 43 is disposed inside the physically and/or electrically formed barrier (not shown) in second information processing unit 3 located on the secure side. Since transmission and reception of the digital signal, which can be easily decoded, after the read information of the card is decoded is performed only inside the barrier, the tamper resistance is ensured. Therefore, since the non-contact type IC card read and write unit 43 is disposed in the second information processing unit 3 on the secure side, the reading performance of the non-contact type IC card is ensured together with the tamper resistance.

As described above, in first information processing unit 2, loop antenna 38 is disposed so as to surround the periphery of first touch panel 10 having a large display area. As shown in FIGs. 4A and 4B, at a timing at which the non-contact type IC card is to be read during the process of payment, the payment terminal device 1 in the present embodiment displays a mark for placing the card, that is, guide mark 53 for guiding the reading position of the non-contact type IC card on first touch panel 10. This means that mark 53 for placing the card is displayed in the vicinity of the center inside loop antenna 38 when viewed from the side of front surface 9 (display surface of first touch panel 10) of first information processing unit 2. Therefore, according to the configuration described above, location and timing at which the non-contact type IC card is to be placed are displayed so as to be easily understandable, and are informed to the operator. The easier operability of payment terminal device 1 and the non-contact type IC card reading performance of payment terminal device 1 are ensured simultaneously.

Loop antenna 38 may be disposed so as to surround the periphery of second touch panel 12, instead of being disposed inside first information processing unit 2. Typically, loop antenna 38 is formed as a conductor pattern on the flexible substrate. The conductor pattern itself can have only a width of several tenths of a millimeter. However, the width of the flexible substrate having a conductor pattern thereon is at least several millimeters to 10 mm or so. In payment terminal device 1 according to the present embodiment, the area of front surface 11 (display surface of second touch panel 12) of second information processing unit 3 is smaller than the area of front surface 9 of first information processing unit 2. Unlike first information processing unit 2, secure second information processing unit 3 is not distributed in great quantities for general consumers. Therefore, secure second information processing unit 3 is designed to be as inexpensive and small as possible. For this reason, as second touch panel 12 provided in second information processing unit 3, a touch panel that is inevitably smaller than first touch panel 10 is adopted. If loop antenna 38 is disposed so as to surround the periphery of second touch panel 12, a much smaller touch panel may be adopted as second touch panel 12 that is provided in second information processing unit 3. The flexible substrate on which loop antenna 38 is formed as a conductor pattern has a width that cannot be neglected as described above. The area of second touch panel 12 provided in second information processing unit 3 is determined such that the flexible substrate does not interrupt the input/display region of the second touch panel. As a result, the size of second touch panel 12 is limited, and the operability of second touch panel 12 becomes worse.

PIN input may also be performed by using means other than the software key, which is displayed by software mounted in second information processing unit 3 (secure unit), on second touch panel 12. For example, secure key input unit 49 (refer to FIG. 3) that is physically provided on the housing of second information processing unit 3 (secure unit) may be used. However, if the flexible substrate on which loop antenna 38 is formed as a conductor pattern is disposed so as to surround the periphery of secure key input unit 49, the size of secure key input unit 49 is limited to the inside of the loop in which the flexible substrate is formed. As a result, since it is difficult to press each key provided in secure key input unit 49 due to its small size, the operability of secure key input unit 49 becomes worse.

In contrast, in the present embodiment, as described above, such a problem can be avoided by arranging loop antenna 38 so as to surround the periphery of first touch panel 10 having a large display area in first information processing unit 2. Therefore, the easier operability and tamper-resistant performance of payment terminal device 1 are ensured simultaneously.

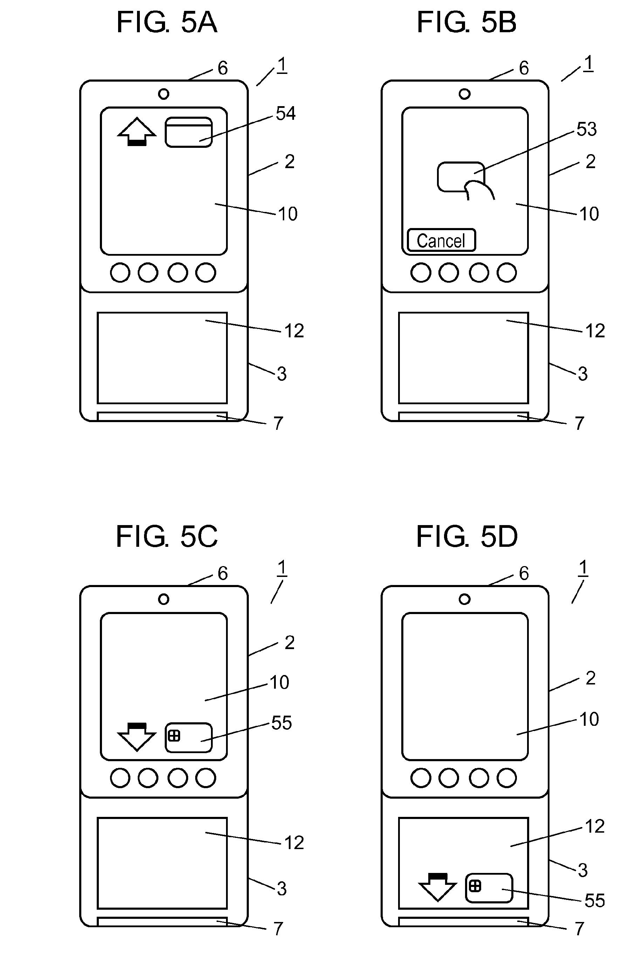

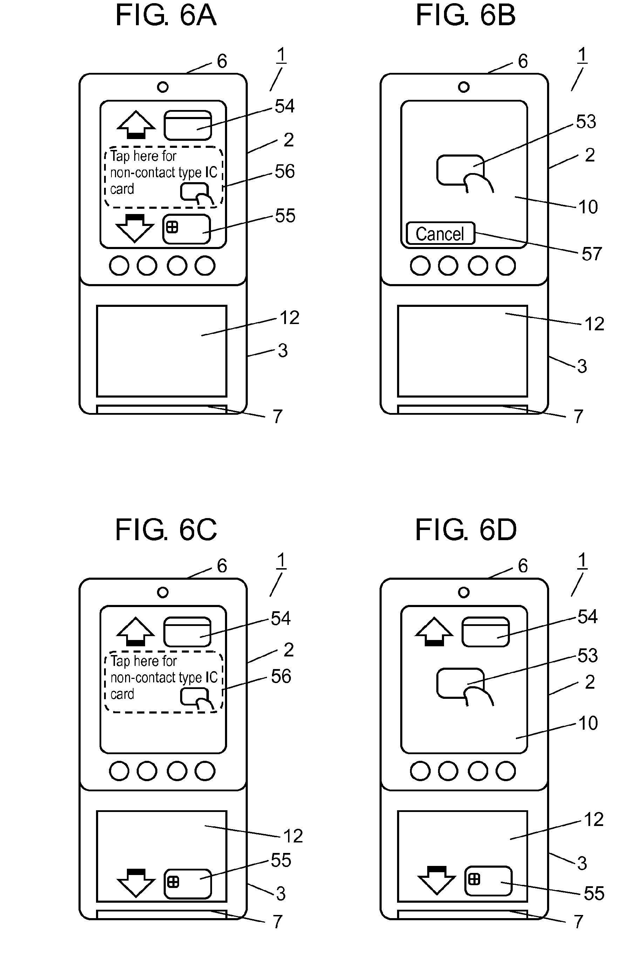

FIGs. 5A to 5D and 6A to 6D are diagrams showing examples of a display screen, which is used to prompt the operator to select the type of card used for payment, in payment terminal device 1 according to the present embodiment. As already described, payment terminal device 1 according to the present embodiment can perform the payment process using one type of card selected from three types of cards including a magnetic stripe card, a contact type IC card, and a non-contact type IC card. Operators of payment terminal device 1 include not only employees having wide operation experience but also persons who are not familiar with the operation, such as new employees or part-time or temporary employees. Payment terminal device 1 should be designed such that even such inexperienced operators can perform a selection smoothly among a plurality of (in particular, three or more types of) payment processing methods. In particular, during selection from three or more types of payment processing methods, the occurrence of human error becomes noticeable compared with selection from two types of payment processing methods.

In payment terminal device 1 according to the present embodiment, the reading position of each of various types of cards is displayed on first touch panel 10 or second touch panel 12, as shown in FIGs. 5A to 5D and 6A to 6D. Through such a configuration, even a person who is not familiar with the operation of payment terminal device 1 can perform a payment process by smoothly selecting a card used for payment from a plurality of (in particular, three or more types of) payment processing methods.

FIG. 5A is a diagram showing an example of a display screen showing a reading position of the magnetic stripe card. Slit 5 for the operator to read the magnetic stripe card with payment terminal device 1 is provided on the upper surface (that is, the upper surface of first information processing unit 2) of payment terminal device 1 according to the present embodiment. Payment terminal device 1 prompts the operator to slide the magnetic stripe card into slit 5 by displaying the screen shown in FIG. 5A. Accordingly, since those who perform the payment process using the magnetic stripe card can recognize the slide position of the magnetic stripe card by looking at guide mark 54 that guides the reading position of the magnetic stripe card displayed on the display screen, it is possible to perform the payment process smoothly.

FIG. 5B is a diagram showing an example of a display screen showing the placing position of the non-contact type IC card. Loop antenna 38 allowing the operator to read the non-contact type IC card with payment terminal device 1 is provided so as to surround the periphery of first touch panel 10, as previously shown in FIGs. 4A and 4B. Payment terminal device 1 prompts the operator to place the non-contact type IC card in the vicinity of the center of first touch panel 10 by displaying the screen shown in FIG. 5B. Accordingly, since those who perform the payment process using the non-contact type IC card can recognize the placing position of the non-contact type IC card by looking at guide mark 53 that guides the reading position of the non-contact type IC card displayed on the display screen, it is possible to perform the payment process smoothly.

FIG. 5C is a diagram showing an example of a display screen showing an insertion position of the contact type IC card. Insertion slot 7 for the operator to read the contact type IC card with payment terminal device 1 is provided on the lower surface (that is, the lower surface of second information processing unit 3) of payment terminal device 1 according to the present embodiment, as previously shown in FIGs. 4A and 4B. Payment terminal device 1 prompts the operator to insert the contact type IC card into insertion slot 7 by displaying the screen shown in FIG. 5B. Accordingly, since those who perform the payment process using the contact type IC card can recognize the insertion position of the contact type IC card by looking at guide mark 55 that guides the reading position of the contact type IC card displayed on the display screen, it is possible to perform the payment process smoothly.

FIG. 5D is a diagram showing an example of a display screen showing the insertion position of the contact type IC card. Alternatively, instead of first touch panel 10 in FIG. 5C, as shown in FIG. 5D, the display screen showing the insertion position of the contact type IC card may be displayed on second touch panel 12 provided in secure second information processing unit 3. Insertion slot 7 of the contact type IC card is provided in second information processing unit 3, similar to second touch panel 12. Guide mark 55 that guides the reading position of the contact type IC card displayed on the display screen showing the insertion position of the contact type IC card is displayed closer to the insertion slot 7 of the contact type IC card than that shown previously in FIG. 5C is. Accordingly, since those who perform the payment process using the contact type IC card can recognize the insertion position of the contact type IC card more accurately by looking at guide mark 55 that guides the reading position of the contact type IC card displayed on the display screen, it is possible to perform the payment process more smoothly.

The display screen of the reading position of each card described above may be repeatedly displayed in order of FIG. 5A → FIG. 5B → FIG. 5C → FIG. 5A or FIG. 5A → FIG. 5B → FIG. 5D → FIG. 5A. The display order may be changed. Alternatively, the display screens shown in the diagrams of FIGs. 5A, 5B, and 5C or the display screens shown in the diagrams of FIGs. 5A, 5B, and 5D may be displayed at the same time. That is, guide marks 53 to 55 for guiding the reading position corresponding to each of all of the types of cards may be displayed at the same time. Through such a configuration, even a person who is not familiar with the operation of payment terminal device 1 can perform a payment process smoothly by selecting a card used for payment from a plurality of (in particular, three or more types of) payment processing methods.

FIGs. 6A to 6D are diagrams showing other examples of the display screen, which is for prompting the operator to select the type of a card used for payment, in payment terminal device 1 according to the present embodiment. FIGs. 6A and 6C are diagrams showing examples of a screen where guide marks 54 and 55 for guiding the reading positions corresponding to the magnetic stripe card and the contact type IC card respectively and guide mark 56 for switching to a readable state of the non-contact type IC card are displayed at the same time. The difference between FIGs. 6A and 6C is the same as the difference between FIGs. 5C and 5D shown previously. That is, in FIG. 6A, guide mark 55 indicating the position of insertion slot 7 of the contact type IC card is displayed on first touch panel 10 provided in first information processing unit 2. In FIGs. 6C and 6D, guide mark 55 indicating the position of insertion slot 7 of the contact type IC card is displayed on second touch panel 12 provided in secure second information processing unit 3.

When the operator performs an operation of reading the magnetic stripe card or the contact type IC card in a state in which the display shown in FIG. 6A or 6C is performed, payment terminal device 1 selects the payment processing of the reader with which the reading operation has been performed. That is, when the magnetic stripe card is slid into slit 5 in which magnetic stripe card reader unit 35 (refer to FIG. 3) is stored in the state described above, payment terminal device 1 selects the payment processing for the magnetic stripe card. When the contact type IC card is inserted into insertion slot 7 in which the contact type IC card reader unit 44 (refer to FIG. 3) is stored in the state described above, payment terminal device 1 selects the payment processing for the contact type IC card.

In payment terminal device 1, a card selection operation is not necessary for the magnetic stripe card or the contact type IC card that is widely used by performing the display previously shown in FIG. 6A or 6C. As a result, since the number of operation steps is reduced, the operability of payment terminal device 1 becomes easier.

FIG. 6B is a diagram showing an example of a screen displayed after the inside of dotted frame 56 displaying "tap here for the non-contact type IC card" is touched by the operator while payment terminal device 1 is performing the display shown in FIG. 6A or 6C. Dotted frame 56 is guide mark 56 for switching to the readable state of the non-contact type IC card that has been described previously. FIG. 6B is a screen showing a mark indicating the placing position of the non-contact type IC card in the vicinity of the center of first touch panel 10, similar to FIG. 5B described previously. In this state, payment terminal device 1 can read the non-contact type IC card. In first touch panel 10 shown in FIG. 6B, "Cancel" button 57 for releasing the readable state of the non-contact type IC card is displayed at the lower left of the mark indicating the placing position of the non-contact type IC card. When the operator taps "Cancel" button 57, payment terminal device 1 switches the display shown in FIG. 6B to the display shown in FIG. 6A or 6C.

Even if the non-contact type IC card is placed in the vicinity of the center of first touch panel 10 while performing the display shown in FIG. 6A or 6C, payment terminal device 1 does not select the payment processing for the non-contact type IC card. A message "tap here for the non-contact type IC card", which is displayed in the vicinity of the center of first touch panel 10, and dotted frame 56 surrounding the message act as a guide mark for switching to the readable mode of the non-contact type IC card. When performing the payment process using the non-contact type IC card, the operator performs card reading after switching the screen shown in FIG. 6A or 6C to the screen shown in FIG. 6B. That is, in payment terminal device 1 according to the present embodiment, a selection step for entering the payment using the non-contact type IC card is set. Payment terminal device 1 can select the payment processing for the non-contact type IC card first by recognizing the non-contact type IC card with read and write unit 43 (refer to FIG. 3) of non-contact type IC card in a state in which the display shown in FIG. 6B is performed.

As described above, the payment terminal device according to the present embodiment is designed such that a larger number of operation steps are required in the payment using the non-contact type IC card, in which the step of selecting the non-contact type IC card is added, than in the payment using other types of cards with a large distribution number. When the operator tries to read a non-contact type IC card and other types of composite cards with magnetic stripe card reader unit 35 or contact type IC card reader unit 44 (refer to FIG. 3), the occurrence of an unintended operation of the operator is reduced. The "composite card" referred to herein is a card in which a non-contact type IC chip and a magnetic stripe or a contact type IC chip are mounted together. The "unintended operation of the operator" means that reading from the non-contact type IC chip has been done incorrectly. Since the occurrence of an unintended operation of the operator is reduced, the operability of payment terminal device 1 according to the present embodiment becomes easier.

The only thing that the operator has to do while payment terminal device 1 is performing the display shown in FIG. 6A or 6C is to determine whether the card used for payment is a magnetic stripe card or a contact type IC card. When the operator performs reading operation of the card, one of the three alternatives is eliminated and accordingly two alternatives are left. Therefore, the possibility of a mistake at the selection of the type of the payment processing is reduced.

When the non-contact type IC card placed in the vicinity of the center of first touch panel 10 is recognized while performing the display shown in FIG. 6A or 6C, payment terminal device 1 may perform an operation prompting the switching of the screen. As examples of the operation prompting the switching of the screen, a message of "tap here for the non-contact type IC card", blinking display of dotted frame 56 surrounding the message, and noticeably changing the background color can be considered. Since the operator recognizes that screen switching is necessary, the operability of payment terminal device 1 becomes easier.

Payment terminal device 1 selects the payment processing for the non-contact type IC card when the non-contact type IC card placed in the vicinity of the center of first touch panel 10 is recognized by read and write unit 43 (refer to FIG. 3) in a state in which the display shown in FIG. 6B is performed. In this state, when a card of a type other than the non-contact type IC card is read, the payment processing corresponding to the card is selected. That is, payment terminal device 1 can read the contact type IC card or the magnetic stripe card even in a state in which the display shown in FIG. 6B is performed and waits for the operator to place the non-contact type IC card in the vicinity of the center of first touch panel 10.

The operator who tries to perform the payment process using the magnetic stripe card or the contact type IC card may accidentally touch the inside of dotted frame 56 displaying "tap here for the non-contact type IC card" while payment terminal device 1 is performing the display shown in FIG. 6A or 6C. Also by such erroneous operation, the screen displayed by payment terminal device 1 is changed from FIG. 6A or 6C to FIG. 6B. However, as previously described, payment terminal device 1 that is performing the display shown in FIG. 6B can read not only the non-contact type IC card but also the contact type IC card or the magnetic stripe card. Even if the screen display of payment terminal device 1 relevant to the selection of cards is switched to the screen for reading the non-contact type IC card due to the unintended operation of the operator, the operator does not need to perform the switching operation again. Therefore, the operability of payment terminal device 1 according to the present embodiment becomes easier.

FIG. 6D is a diagram showing an example of a screen displayed after the inside of dotted frame 56 displaying "tap here for the non-contact type IC card" is touched by the operator while payment terminal device 1 is performing the display shown in FIG. 6A or 6C. Payment terminal device 1 may perform the display shown in FIG. 6D instead of that shown in FIG. 6B. Through the display shown in FIG. 6D, the operator can recognize more clearly that the contact type IC card or the magnetic stripe card can be read even in a state in which payment terminal device 1 is waiting for the reading of non-contact type IC card. Therefore, the operability of payment terminal device 1 according to the present embodiment becomes easier.

In the display on first touch panel 10 shown in FIG. 6D, the "Cancel" button 57 described in FIG. 6B may be displayed together with other marks. The operation of payment terminal device 1 when "Cancel" button 57 is tapped by the operator is the same as that described in FIG. 6B. If first touch panel 10 or second touch panel 12 is tapped by the operator during the display shown in FIG. 6D in which "Cancel" button 57 is not displayed, payment terminal device 1 may switch the display shown in FIG. 6D to the display shown in FIG. 6A or 6C. The operation of switching the reading screen of the non-contact type IC card to another screen as described above may be also used as an operation to cancel the reading operation after making payment terminal device 1 perform an operation of reading the non-contact type IC card unintentionally by the operator.

Through the configuration described above, even a person who is not familiar with the operation of payment terminal device 1 can perform a payment process smoothly by selecting a card used for payment from a plurality of (in particular, three or more types of) payment processing methods.

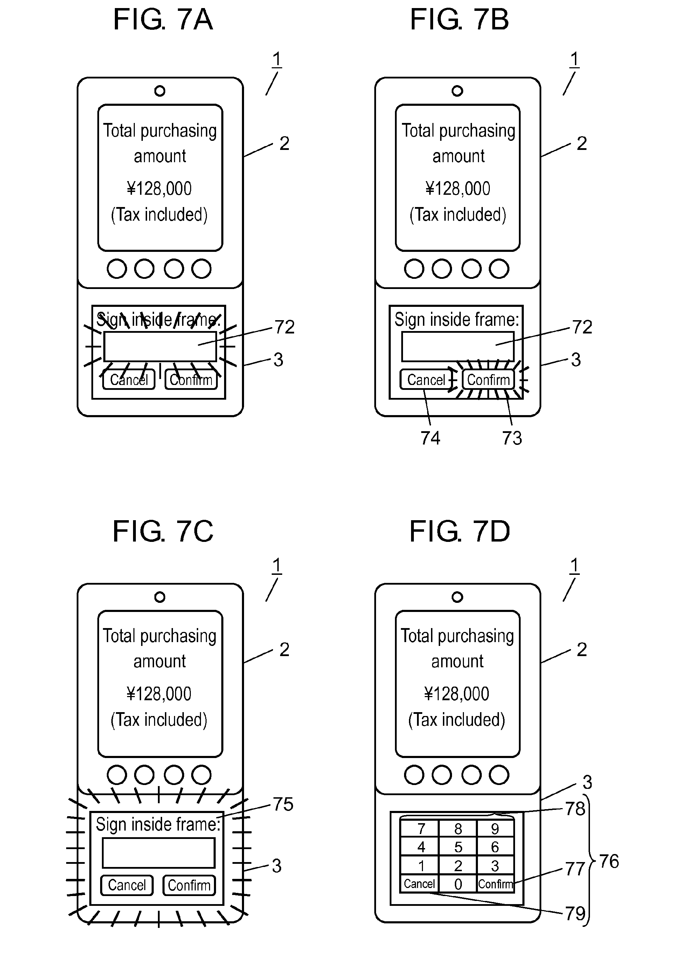

FIGs. 7A to 7D are diagrams showing examples of a display screen in a secure mode. After the type of the card used for payment is specified by the operator and the payment processing corresponding to the type is selected through the procedure described above with reference to FIGs. 5A to 5D and 6A to 6D, payment terminal device 1 executes the process on the selected payment processing. In order to complete the payment, payment terminal device 1 requests the holder of the card used for payment to perform an authentication operation for confirming whether or not the user of the card is a legitimate owner.

FIGs. 7A to 7C are diagrams showing examples of a display screen for making the user of the card used for payment enter the signature. FIG. 7D is a diagram showing an example of a display screen for making the user of the card used for payment enter the PIN. Typically, when performing an authentication operation for confirming whether or not the card used for payment is held by a legitimate owner, the authentication operation is performed based on the signature in FIGs. 7A to 7C or the PIN in FIG. 7D. Since payment terminal device 1 switches the content displayed in secure second information processing unit 3 according to the authentication method required, it is possible to respond to a plurality of payment methods.

As described above, payment terminal device 1 according to the present embodiment includes non-secure (that is, on the side that is not secure) first information processing unit 2 (non-secure unit) and secure second information processing unit 3 (secure unit). Secure, when referred to herein, means having tamper resistance required for the payment terminal device. Application software for performing the payment process (hereinafter, referred to as "payment application") is mounted in non-secure first information processing unit 2 (non-secure unit), and operates in first information processing unit 2. The payment application mainly includes a man-machine interface and a protocol for communication with the payment center. In addition to these, the payment application of payment terminal device 1 according to the present embodiment includes a communication interface for communication with secure second information processing unit 3. Product information, price, quantity, and the like of a product to be paid for are displayed on first touch panel 10 provided in first information processing unit 2. However, the input unit (secure input unit) of the signature or the PIN used to authenticate whether or not the card used for payment is held by a legitimate owner is second touch panel 12 disposed in secure second information processing unit 3 (secure unit).

The display of the screen shown in FIGs. 7A to 7D is performed when the second information processing unit 3 receives an instruction from the payment application operating in first information processing unit 2. When the authentication operation is performed by using the signature shown in FIGs. 7A to 7C, the operator on the service provider side compares the signature entered in signature block 72 of second touch panel 12 by the user of the card with the signature written on the card and checks whether or not the features of the two signatures match each other. When it is determined that the features of the two signatures match each other, the operator on the service provider side instructs a printer (not shown), which is built in or connectable to payment terminal device 1, to print the receipt. If an authentication operation is performed by using the PIN shown in FIG. 7D, payment terminal device 1 performs an operation for comparing the PIN, which is entered by the user of the card using PINPAD 76 displayed on second touch panel 12, with information regarding the PIN stored in the card. If a matching result indicating "PINs match each other" (or "Input PIN is OK") is obtained, payment terminal device 1 communicates with the payment center (not shown) through local radio communication unit 22 or radio telephone line communication unit 24 (refer to FIG. 3) and completes the payment procedure.

As described above, the input of the signature or the PIN used to authenticate whether or not the card used for payment is held by a legitimate owner is performed on second touch panel 12 disposed in secure second information processing unit 3. However, the payment application is installed in non-secure first information processing unit 2 (non-secure unit), and operates in first information processing unit 2. Malicious software may be installed in non-secure first information processing unit 2, or an OS or application software installed in first information processing unit 2 may be infected with a virus. There is a risk that the legitimate input information of the signature or PIN may be stolen by such malicious software or viruses. The stealing of input information is performed, for example, by guiding the input of the signature or PIN so as to be performed on first touch panel 10 provided in non-secure first information processing unit 2 rather than being performed at the input position shown in FIGs. 7A to 7D. Therefore, even if payment terminal device 1 includes non-secure first information processing unit 2, payment terminal device 1 should be designed such that both the operator on the service provider side and the user of the card on the service receiving side can perform the payment process without worry.

In order to solve the aforementioned problem, in payment terminal device 1 according to the present embodiment, a state display portion of the non-secure mode/secure mode is disposed in secure second information processing unit 3 (secure unit). That is, payment terminal device 1 displays which the non-secure mode and the secure mode payment terminal device 1 is in, in or near a region where the input of the signature or PIN is performed.

Among FIGs. 7A to 7C that are diagrams showing the display screen for making the user of the card used for payment enter the signature, FIG. 7A is a diagram showing an example of the display screen before the signature is entered. As shown in FIG. 7A, secure second information processing unit 3 of payment terminal device 1 may perform flashing or "highlighted lighting" of signature block 72 on second touch panel 12. Examples of the "highlighted lighting" include brighter lighting than the surrounding region or using a color that is more noticeable than the surrounding region (high-purity color or additive/subtractive three primary colors or colors close thereto). FIG. 7B is a diagram showing an example of a display screen until "Confirm" button 73 is pressed by the signer (card user) from the start of signature input. As shown in FIG. 7B, second information processing unit 3 may perform flashing or "highlighted lighting" of "Confirm" button 73. FIG. 7C is a diagram showing an example of another display screen before the signature is entered or until "Confirm" button 73 is pressed by the signer after the start of signature input. As shown in FIG. 7C, second information processing unit 3 may perform flashing or "highlighted lighting" of marginal portion 75 other than in signature block 72, "Confirm" button 73, and "Cancel" button 74.

According to the display screen shown in this FIG. 7C, the signer (card user) does not feel too bright about signature block 72, "Confirm" button 73, and "Cancel" button 74. Therefore, the signer (card user) can correctly specify the input position of the signature or the pressing position of "Confirm" button 73 or "Cancel" button 74. In the display screens shown in FIGs. 7A to 7C, display colors of signature block 72, "Confirm" button 73, and "Cancel" button 74 or display colors of the frame borders thereof may be changed according to the signing progress. For example, the display colors of signature block 72, "Confirm" button 73, and "Cancel" button 74 or display colors of the frame borders thereof before the signature is entered may be different from those until "Confirm" button 73 is pressed after the start of signature input.

As one of display screens for PIN input, FIG. 7D is a diagram showing an example of a display screen before the user of the card used for payment completes PIN input. As shown in FIG. 7D, secure second information processing unit 3 of payment terminal device 1 may perform flashing or "highlighted lighting" of the "Confirm" button on second touch panel 12. Alternatively, similar to FIG. 7C, second information processing unit 3 may perform flashing or "highlighted lighting" of marginal portion 78 other than on PINPAD 76 including "Confirm" button 77. The user of the card does not feel too bright about PINPAD 76 including "Confirm" button 77. Therefore, the user of the card can correctly specify the pressing position of each key of PINPAD 76 including "Confirm" button 77. In the display screen shown in FIG. 7D and the display state of the marginal portion of PINPAD 76 described above, the display color of each key of PINPAD 76 including "Confirm" button 77 or the display color of the frame border thereof may be changed according to the PIN input progress. For example, the display color of each key of PINPAD 76 including "Confirm" button 77 or the display color of the frame border thereof before the PIN is entered may be different from that before "Confirm" button 73 is pressed after the start of PIN input.

In these examples, the state display portion of the non-secure mode/secure mode is second touch panel 12 and second display unit 45 (refer to FIG. 3) disposed in secure second information processing unit 3 (secure unit). More specifically, the state display portion of the non-secure mode/secure mode is also a portion, in which flashing, lighting, and display color change are performed, on second touch panel 12. Switching between the non-secure mode and the secure mode occurs in the middle of the payment process. Payment terminal device 1 shows that payment terminal device 1 is in a secure mode by performing the display change described above with display on second touch panel 12 disposed in secure second information processing unit 3 (secure unit), so that the operator is notified of the secure mode. Contrary to this, if there is no display change described above on second touch panel 12, payment terminal device 1 is in a non-secure mode.

That is, at the time of PIN input, payment terminal device 1 in a secure mode does not output the numerical values (PIN) entered on second touch panel 12 in plain text from secure second information processing unit 3. Payment terminal device 1 outputs the entered PIN to the payment center after encoding the PIN. Alternatively, payment terminal device 1 performs PIN comparison with respect to the non-contact type IC card or the contact type IC card without outputting the entered PIN to the payment center from secure second information processing unit 3. In a non-secure mode, second information processing unit 3 of payment terminal device 1 outputs numeric values entered in second touch panel 12 in plain text to first information processing unit 2. Second touch panel 12 in a non-secure mode provides convenience when used as a keypad for inputting numerical values.

Therefore, since the operator of payment terminal device 1 can easily determine whether or not payment terminal device 1 is in a secure mode, it is possible to perform the input of the signature or PIN without worry. Payment terminal device according to the present embodiment can be safely used since the mistakes of the operator occur less frequently. In addition to this, payment terminal device 1 in a non-secure mode provides convenience when used as a keypad for inputting numerical values.

The state display portion of the non-secure mode/secure mode in the present disclosure is not limited to a portion in which a change in the display on second touch panel 12 described above is performed by software installed in second information processing unit 3 (secure unit). The state display portion of the non-secure mode/secure mode may be a keypad that is physically provided on the housing of second information processing unit 3 (secure unit) and that includes an illumination unit or a light emitting unit. Such a keypad including an illumination unit or a light emitting unit is included in a keypad that forms secure key input unit 49 (refer to FIG. 3), for example.

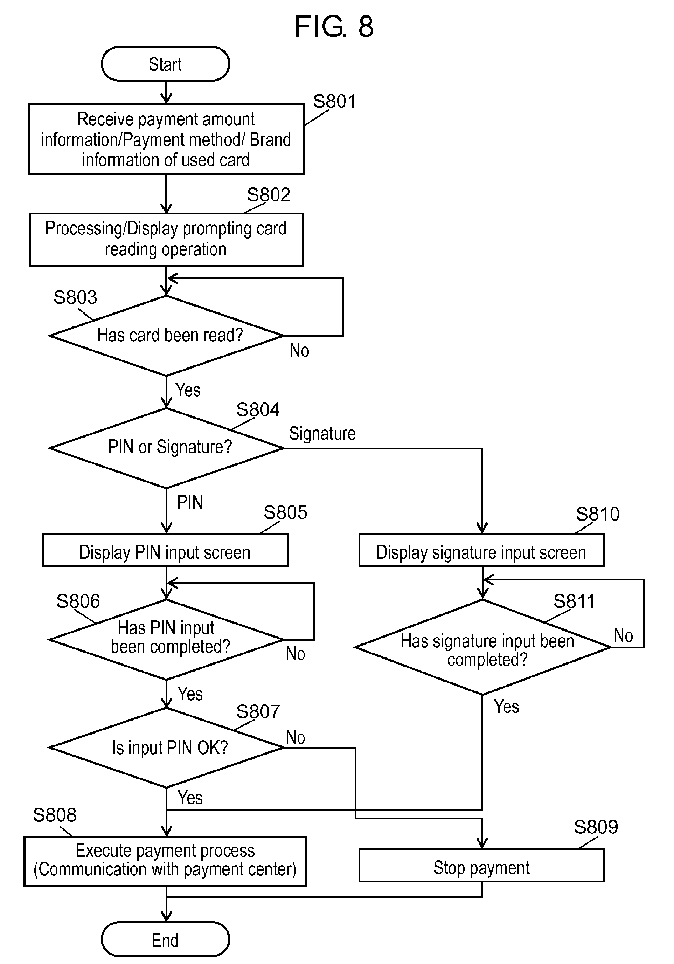

Each operation in the payment terminal device, which has the configuration described above and in which display is performed, is performed as shown in FIGs. 8 to 12, for example.

FIG. 8 is a diagram showing an example of the payment process flow in payment terminal device 1. Payment terminal device 1 starts a payment procedure by executing a payment application (not shown) installed in first information processing unit 2 (refer to FIGs. 1A to 3 and the like). Payment terminal device 1 receives information regarding payment, such as amount information, payment method, and information on the card brand used for payment, from the outside of the payment terminal device 1 or by the input thereof for the payment application (step S801). When the information regarding payment is received, payment terminal device 1 performs processing and display prompting the operation of reading the card used for payment as shown in FIG. 1A, for example (step S802). The processing and display prompting the operation of reading the card used for payment are performed until the reading of the card is confirmed (No in step S803). These steps S802 and S803 will be described in detail later. If the reading of the card is confirmed (Yes in step S803), payment terminal device 1 performs a card authentication procedure. The card authentication method is determined based on the type and information of the card used for payment, and based on contracts signed between the affiliate store where payment terminal device 1 is used and the payment center, and the like. When the authentication method is based on the PIN (PIN in step S803), for example, payment terminal device 1 displays a screen, on which the PIN shown in FIG. 7D can be entered, on second touch panel 12 disposed in second information processing unit 3 (step S805 of FIG. 8), and waits until the input of the PIN is completed by the user of the card (No in step S806). The display shown in FIG. 7D is performed until the completion of the PIN input is confirmed. These steps S805 and S806 will be described in detail later.

If the completion of the PIN input is confirmed (Yes in step S806 of FIG. 8), payment terminal device 1 waits until the matching result indicating whether or not the entered PIN matches a PIN registered in the payment center or the card used for payment is obtained (No in step S807). If a matching result indicating that the two PINs match each other is obtained (Yes in step S807), payment terminal device 1 executes a subsequent payment procedure (step S808). If a matching result indicating that the two PINs do not match each other is obtained (No in step S807), the subsequent payment procedure is stopped (step S809).

When the authentication method is based on the signature (signature in step S803), payment terminal device 1 displays a screen, on which the signature can be entered, on second touch panel 12 disposed in the second information processing unit (step S810 in FIG. 8), and waits until the input of the signature is completed by the user of the card (No in step S811). The display mode of the screen on which the signature can be entered is shown in FIGs. 7A to 7C, for example. The display of the screen on which the signature can be entered is performed until the completion of the input of the signature is confirmed. These steps S810 and S811 will be described in detail later. If the completion of the signature input is confirmed (Yes in step S811 of FIG. 8), payment terminal device 1 performs the subsequent payment procedure (step S808).

In the present embodiment, the above-described operation and display are performed by cooperation of first information processing unit 2 provided in payment terminal device 1 and secure second information processing unit 3. The payment application itself operates in first information processing unit 2. The display of information regarding payment, such as amount information, payment method, and information of the card brand used for payment, or the display prompting the operation of reading the card used for payment may be performed in either first information processing unit 2 or secure second information processing unit 3. The important thing is that the screen, on which the PIN or the signature can be entered, is displayed on second touch panel 12 disposed in secure second information processing unit 3. The display of the screen is performed until the input of the PIN or signature is completed by the user of the card after the display prompting the operation of reading the card used for payment is performed and the reading of the used card is performed.

As described above, in the payment terminal device according to the present embodiment, it is possible to enter the authentication information of the card used for payment, that is, the signature or the PIN by the customer and to display the signature or the PIN while ensuring "tamper resistance". Application software for payment operates smoothly without difficulty.

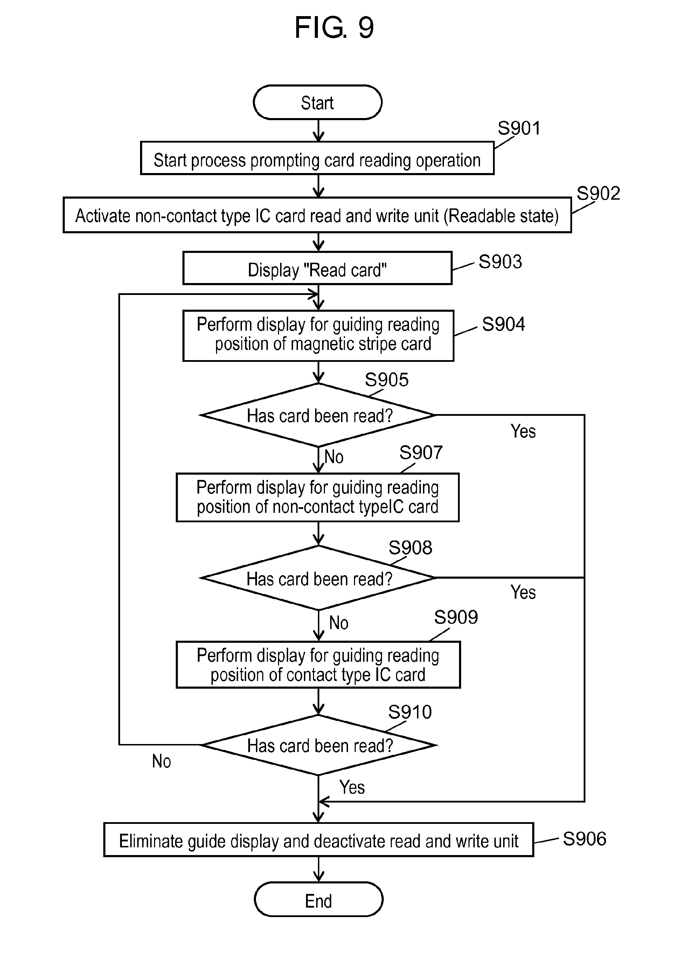

FIG. 9 is a diagram showing an example of the more detailed process flow for the processing and display prompting the operation of reading the card used for payment (S802) and the reading of the card (S803) in FIG. 8 shown previously. Payment terminal device 1 starts a process prompting the card reading operation (step S901), and activates non-contact type IC card read and write unit 43 (refer to FIG. 3) first (S902) to transition to a state in which the non-contact type IC card can be read. At the same time, although not shown in FIG. 9, payment terminal device 1 also activates magnetic stripe card reader unit 35 and contact type IC card reader unit 44 (refer to FIG. 3) to transition to a state in which the card of each type can be read. Then, payment terminal device 1 performs a display prompting the operation of reading the card used for payment, and for example, displays "Read the card" (refer to FIGs. 1A and 1B). This display may be performed in either first touch panel 10 provided in first information processing unit 2 or a second touch panel provided in secure second information processing unit 3. Then, payment terminal device 1 displays, for example, guide mark 54 for guiding the reading position of the magnetic stripe card shown in FIG. 5A (step S904 of FIG. 9). The display position of guide mark 54 of the magnetic stripe card is closer to the reading position of the magnetic stripe card than the reading positions of the other media, that is, to the reading position of the non-contact type IC card and the reading position of the contact type IC card.

After the reading of the magnetic stripe card is performed by the operator of payment terminal device 1 (Yes in step S905), payment terminal device 1 eliminates the display guiding the reading position of the magnetic stripe card and deactivates non-contact type IC card read and write unit 43 (refer to FIG. 3) (step S906). At the same time, although not shown in FIG. 9, payment terminal device 1 also deactivates magnetic stripe card reader unit 35 and contact type IC card reader unit 44 (refer to FIG. 3) to transition to a state in which the card of each type cannot be read. If it is determined that the reading of the magnetic stripe card has not been performed by the operator of payment terminal device 1 (No in step S905), payment terminal device 1 displays, for example, guide mark 53 for guiding the reading position of the non-contact type IC card shown in FIG. 5B (step S907 of FIG. 9). The display position of guide mark 53 of the non-contact type IC card is closer to the reading position of the non-contact type IC card than the reading positions of the other media, that is, to the reading position of the magnetic stripe card and the reading position of the contact type IC card.

After the reading of the non-contact type IC card is performed by the operator of payment terminal device 1 (Yes in step S908), payment terminal device 1 eliminates the display guiding the reading position of the non-contact type IC card and deactivates non-contact type IC card read and write unit 43 (refer to FIG. 3) (step S906). At the same time, although not shown in FIG. 9, payment terminal device 1 also deactivates magnetic stripe card reader unit 35 and contact type IC card reader unit 44 (refer to FIG. 3) to transition to a state in which the card of each type cannot be read. If it is determined that the reading of the non-contact type IC card has not been performed by the operator of payment terminal device 1 (No in step S908), payment terminal device 1 displays, for example, guide mark 55 for guiding the reading position of the contact type IC card shown in FIG. 5C or 5D (step S909 of FIG. 9). The display position of guide mark 55 of the contact type IC card is closer to the reading position of the contact type IC card than the reading positions of the other media, that is, to the reading position of the magnetic stripe card and the reading position of the non-contact type IC card.

After the reading of the contact type IC card is performed by the operator of payment terminal device 1 (Yes in step S910), payment terminal device 1 eliminates the display guiding the reading position of the contact type IC card and deactivates contact type IC card read and write unit 44 (refer to FIG. 3) (step S906). At the same time, although not shown in FIG. 9, payment terminal device 1 also deactivates magnetic stripe card reader unit 35 and contact type IC card reader unit 44 (refer to FIG. 3) to transition to a state in which the card of each type cannot be read. If it is determined that the reading of the contact type IC card has not been performed by the operator of payment terminal device 1 (No in step S910), payment terminal device 1 displays guide mark 54 for guiding the reading position of the magnetic stripe card shown in FIG. 5A again (step S904 of FIG. 9). As described above, the display of the reading positions of the magnetic stripe card, the non-contact type IC card, and the contact type IC card is repeated.

The important thing herein is that the display position of the guide mark of each card after the display prompting the reading of the card used for payment is performed is closer to the reading position of the card of the type indicated by the guide mark than the reading positions of the other cards. The display prompting the reading of the card and the display of the reading position of each card are performed in the display unit (first touch panel 10 or second touch panel 12) provided in payment terminal device 1. After the reading of the card used for payment is performed, the display unit provided in payment terminal device 1 ends the display of the reading position of each card. As described above, even a person who is not familiar with the operation of the payment terminal device of the present disclosure can perform a payment process smoothly by selecting a card used for payment from a plurality of (in particular, three or more types of) payment processing methods.

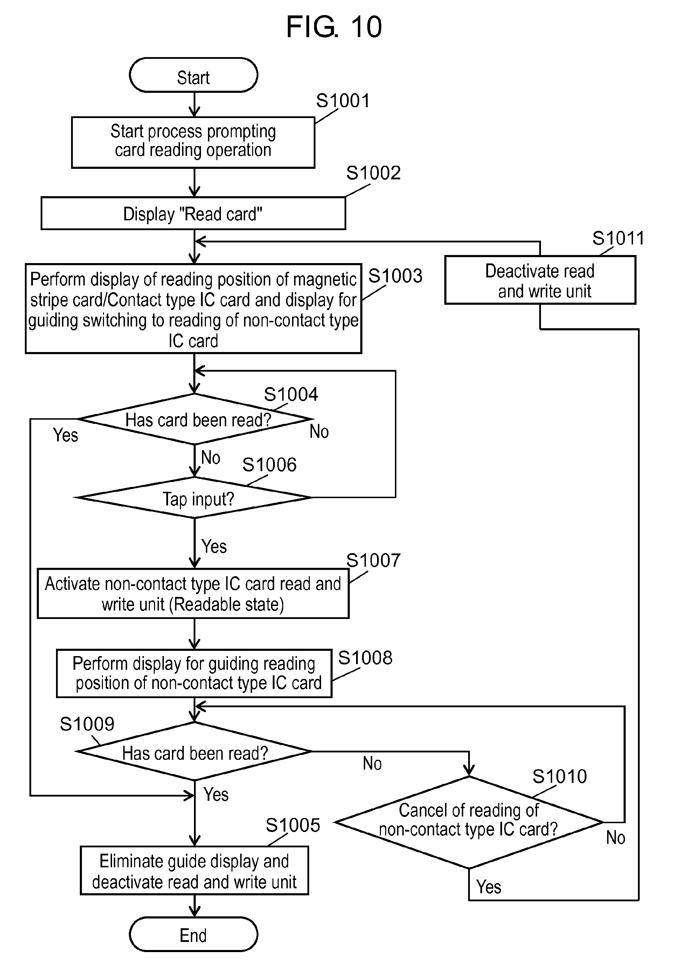

FIG. 10 is a diagram showing an example of the more detailed process flow for the processing and display prompting the operation of reading the card used for payment (step S802) and the reading of the card (step S803) in FIG. 8 shown previously. However, the process flow shown in FIG. 10 is different from that in FIG. 9 shown previously. In FIG. 10, payment terminal device 1 starts a process prompting the card reading operation (step S1001). For example, payment terminal device 1 performs a display prompting the operation of reading the card used for payment, such as "Read the card" (refer to FIGs. 1A and 1B) (step S1002). This display may be performed in either first touch panel 10 provided in first information processing unit 2 or second touch panel provided in secure second information processing unit 3. Then, payment terminal device 1 displays the reading positions of the magnetic stripe card and the contact type IC card and guide marks 54 to 56 for guiding the switching to the reading of the non-contact type IC card shown in FIG. 6A or 6C, for example (step S1003 of FIG. 10). The display positions of guide marks 54 and 55 for guiding the reading positions of the magnetic stripe card and the contact type IC card are closer to the reading position of the card of the type indicated by the guide mark than the reading positions of the other types of cards. At the same time, although not shown in FIG. 10, payment terminal device 1 activates magnetic stripe card reader unit 35 and contact type IC card reader unit 44 (refer to FIG. 3) to transition to a state in which the card of each type can be read. In a state in which the display guiding the switching to the reading of the non-contact type IC card is performed, non-contact type IC card read and write unit 43 (refer to FIG. 3) is not activated, and payment terminal device 1 is in a state in which the non-contact type IC card cannot be read.

After the reading of the magnetic stripe card or the contact type IC card is performed by the operator of payment terminal device 1 (Yes in step S1004), payment terminal device 1 eliminates the display of the reading positions of the magnetic stripe card and the contact type IC card and the display guiding the switching to the reading of the non-contact type IC card. Then, non-contact type IC card read and write unit 43 (refer to FIG. 3) is deactivated (step S1005; non-contact type IC card read and write unit 43 has been in an inactive state). At the same time, although not shown in FIG. 10, payment terminal device 1 also deactivates magnetic stripe card reader unit 35 and contact type IC card reader unit 44 (refer to FIG. 3) to transition to a state in which the card of each type cannot be read. If it is determined that the reading of the magnetic stripe card or the contact type IC card has not been performed by the operator of payment terminal device 1 (No in step S1004), payment terminal device 1 determines whether or not guide mark 56 for guiding the switching to the reading of the non-contact type IC card has been tapped (step S1006). If it is determined that guide mark 56 for guiding the switching to the reading of the non-contact type IC card has not been tapped by the operator, payment terminal device 1 waits until either the reading of the magnetic stripe card or the contact type IC card or the switching to the reading of the non-contact type IC card is performed (No in step S1006).

If it is determined that guide mark 56 for guiding the switching to the reading of the non-contact type IC card has been tapped by the operator (Yes in step S1006), payment terminal device 1 activates non-contact type IC card read and write unit 43 (refer to FIG. 3) (S1007). Then, payment terminal device 1 transitions to a state in which the non-contact type IC card can be read, and performs a display guiding the reading position of the non-contact type IC card shown in FIG. 6B or 6D, for example, (step S1008 of FIG. 10). The display position of guide mark 53 for guiding the reading position of the non-contact type IC card is closer to the reading position of the non-contact type IC card than the reading positions of the other media, that is, to the reading position of the magnetic stripe card and the reading position of the contact type IC card. Although not shown in FIG. 10, payment terminal device 1 according to the present embodiment continues activating magnetic stripe card reader unit 35 and contact type IC card reader unit 44 (refer to FIG. 3) even after the transition to the state in which the non-contact type IC card can be read. Accordingly, payment terminal device 1 can read all of the non-contact type IC card, the contact type IC card, and the magnetic stripe card. As described in FIGs. 6A to 6D, even if the screen display of payment terminal device 1 relevant to the selection of cards is switched to the screen for reading the non-contact type IC card due to the unintended operation of the operator, the operator does not need to perform the switching operation again. Therefore, the operability of payment terminal device 1 according to the present embodiment becomes easier. (however, in contrast to the present embodiment, payment terminal device 1 may deactivate magnetic stripe card reader unit 35 and contact type IC card reader unit 44 (refer to FIG. 3) after the transition to the state in which the non-contact type IC card can be read. In this case, payment terminal device 1 can read only the non-contact type IC card).

After the reading of the non-contact type IC card is performed by the operator of payment terminal device 1 (Yes in step S1009), payment terminal device 1 eliminates the display guiding the reading position of the non-contact type IC card and deactivates the non-contact type IC card read and write unit 43 (refer to FIG. 3) (step S1005). At the same time, although not shown in FIG. 10, payment terminal device 1 also deactivates magnetic stripe card reader unit 35 and contact type IC card reader unit 44 (refer to FIG. 3) to transition to a state in which the card of each type cannot be read. If it is determined that the reading of the non-contact type IC card has not been performed by the operator of payment terminal device 1 (No in step S1009), payment terminal device 1 determines whether or not the display position guiding the cancellation of the reading of the non-contact type IC card has been tapped (step S1010). If it is determined that the display position guiding the cancellation of the reading of the non-contact type IC card has not been tapped by the operator, payment terminal device 1 waits for the reading of the non-contact type IC card (No in step S1010). In a state in which the display guiding the reading position of the non-contact type IC card is performed, payment terminal device 1 can read not only the non-contact type IC card but also the contact type IC card and the magnetic stripe card.

If it is determined that the display position guiding the cancellation of the reading of the non-contact type IC card has been tapped by the operator (Yes in step S1010), payment terminal device 1 deactivates non-contact type IC card read and write unit 43 (refer to FIG. 3) (S1011). In addition to this, payment terminal device 1 may eliminate the display of guide mark 53 for guiding the reading position of the non-contact type IC card. Then, payment terminal device 1 displays guide marks 55 and 56 for guiding the reading positions of the magnetic stripe card and the contact type IC card and the guide mark 54 for guiding the switching to the reading of the non-contact type IC card, which are shown in FIG. 6A or 6C (step S1003 of FIG. 10). Although not shown in FIG. 10, payment terminal device 1 activates magnetic stripe card reader unit 35 and contact type IC card reader unit 44 (refer to FIG. 3) so that the card of each type can be read.

The important thing herein is that the display position of the guide mark of each card after the display prompting the reading of the card used for payment is performed is closer to the reading position of the card of the type indicated by the guide mark than the reading positions of the other cards. The display prompting the reading of the card and the display of the reading position of each card are performed in the display unit (first touch panel 10 or second touch panel 12) provided in payment terminal device 1. After the reading of the card used for payment is performed, the display unit provided in payment terminal device 1 ends the display of the reading position of each card. In a state in which the display guiding the reading positions of the magnetic stripe card and the contact type IC card and the display guiding the switching to the reading of the non-contact type IC card are performed, payment terminal device 1 cannot read the non-contact type IC card. In contrast, in a state in which the display guiding the reading position of the non-contact type IC card is performed, payment terminal device 1 can read not only the non-contact type IC card but also the contact type IC card and the magnetic stripe card. As described above, even a person who is not familiar with the operation of the payment terminal device of the present disclosure can perform a payment process by smoothly selecting a card used for payment from a plurality of (in particular, three or more types of) payment processing methods.

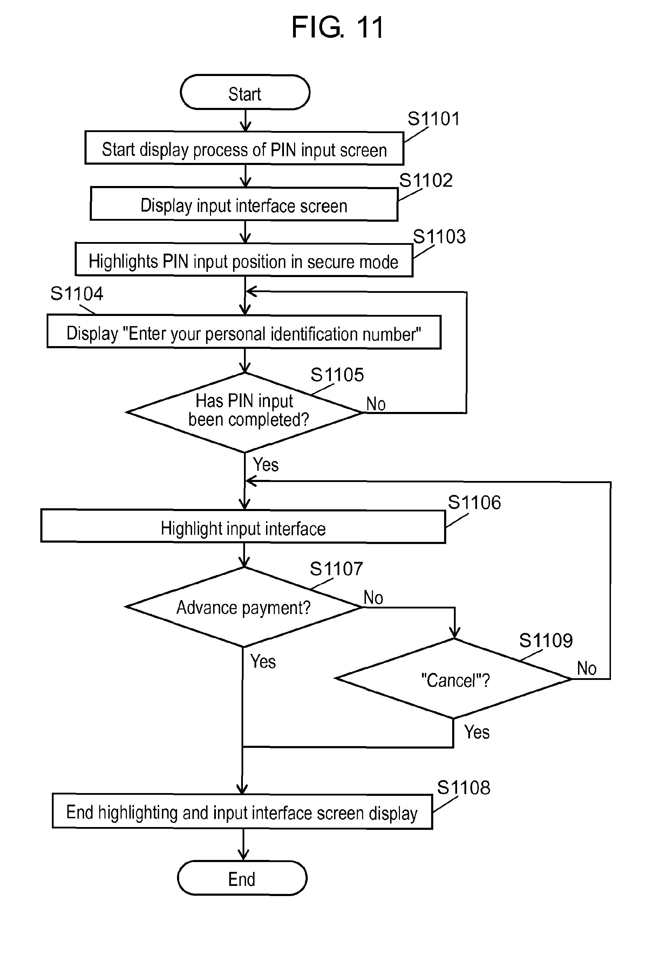

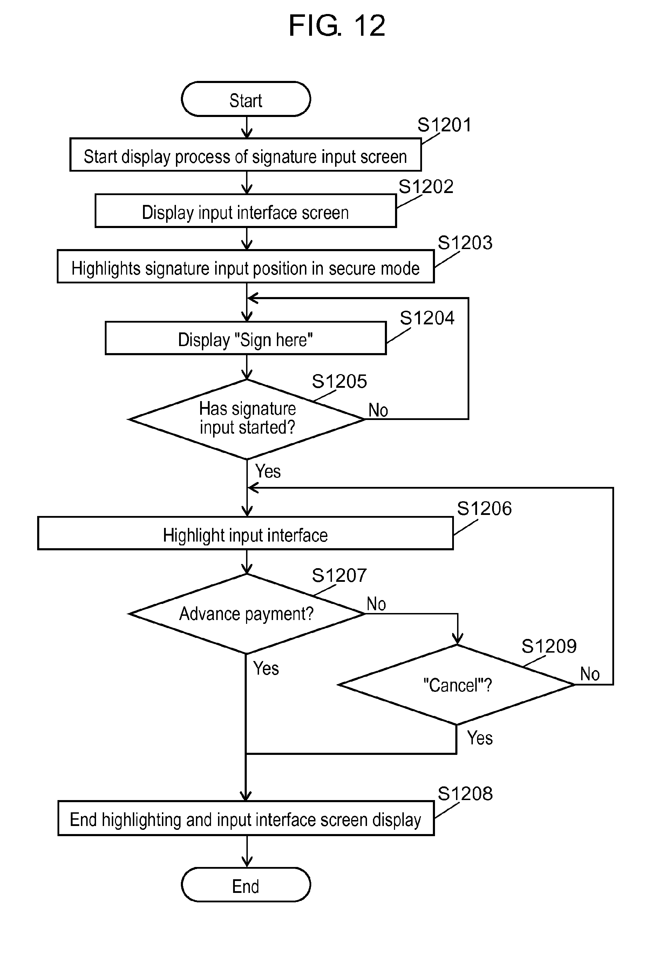

FIG. 11 is a diagram showing an example of the more detailed process flow for the display and input regarding the PIN shown in steps S805 and S806 of FIG. 8 shown previously. FIG. 12 is a diagram showing an example of the more detailed process flow for the display and input regarding the signature shown in steps S810 and S811 of FIG. 8 shown previously.

In FIG. 11, payment terminal device 1 starts a PIN input/display process (step S1101), and displays a PIN input interface screen (step S1102). In this display mode, for example, in the state shown in FIG. 7D, nothing is highlighted. Then, payment terminal device 1 highlights the input position of the PIN in order to notify the operator that payment terminal device 1 is in a secure mode (step S1103). In this display mode, for example, in the state shown in FIG. 7D, numeric keys themselves or the frame border surrounding the numeric keys may be highlighted. Then, payment terminal device 1 may perform a display prompting the input of the PIN, for example, a display "Enter your personal identification number" (step S1104). Payment terminal device 1 waits until the completion of the PIN input is confirmed (No in step S1105).

If the completion of the PIN input is confirmed (Yes in step S1105), payment terminal device 1 highlights the input interface (step S1106). In the highlighting mode, for example, as shown in FIG. 7D, "Confirm" button 77 may be highlighted. Depending on whether or not "Confirm" button 77 is pressed, payment terminal device 1 determines whether or not to advance payment (whether or not to proceed to the procedure of payment). If "Confirm" button 77 is pressed (Yes in step S1107), payment terminal device 1 ends the highlighting and the display of the PIN input interface (step S1108). If "Confirm" button 77 is not pressed (No in step S1107), payment terminal device 1 may determine whether or not "Cancel" button 79 has been pressed next. If "Cancel" button 79 is pressed (Yes in step S1109), payment terminal device 1 ends the highlighting and the display of the PIN input interface (step S1108). If "Cancel" button 79 is not pressed (No in step S1109), payment terminal device 1 continues the highlighting (step S1106), and waits for advancing of the procedure of payment.

FIG. 12 is a diagram showing an example of the more detailed process flow for the display and input regarding the signature shown in steps S810 and S811 of FIG. 8 shown previously. The process flow shown in FIG. 12 is almost the same as the process flow shown in FIG. 11 except for a small difference. That is, in FIG. 12, payment terminal device 1 starts a signature input/display process (step S1201), and displays a signature input interface screen (step S1202). In this display mode, for example, in the state shown in FIGs. 7A to 7C, nothing is highlighted. Then, payment terminal device 1 highlights the input position of the signature shown in FIG. 7A or 7C, for example, in order to notify the operator that payment terminal device 1 is in a secure mode (step S1203). Then, payment terminal device 1 may perform a display prompting the input of the signature, for example, a display "Sign here" (step S1204). Payment terminal device 1 waits until the completion of the signature input is confirmed (No in step S1205).

If the completion of the signature input is confirmed (Yes in step S1205), payment terminal device 1 highlights the input interface (step S1206). In the highlighting mode, for example, as shown in FIG. 7B, "Confirm" button 73 may be highlighted. Depending on whether or not "Confirm" button 73 is pressed, payment terminal device 1 determines whether or not to advance payment (whether or not to proceed to the procedure of payment). If "Confirm" button 73 is pressed (Yes in step S1207), payment terminal device 1 ends the highlighting and the display of the signature input interface (step S1208). If "Confirm" button 73 is not pressed (No in step S1207), payment terminal device 1 may determine whether or not "Cancel" button 74 has been pressed next. If "Cancel" button 74 is pressed (Yes in step S1209), payment terminal device 1 ends the highlighting and the display of the signature input interface (step S1208). If "Cancel" button 74 is not pressed (No in step S1209), payment terminal device 1 continues the highlighting (step S1206), and waits for the advancing of the procedure of payment.

Since highlighting is performed through the above configuration, the operator of the payment terminal device according to the present embodiment can easily determine whether or not the payment terminal device is in a secure mode. For this reason, it is possible to perform the input of the signature or PIN without worry. Therefore, the payment terminal device of the present disclosure can be safely used with less mistake of the operator.

As described above, in the information processing system of the present disclosure, it is possible to enter the authentication information of the card used for payment, that is, the signature or the PIN by the customer and to display the signature or the PIN while ensuring the "tamper resistance". Application software for payment and application software used for other work operate smoothly without difficulty.

The easier operability of the information processing system of the present disclosure and the non-contact type IC card reading performance of the payment terminal device are ensured simultaneously.

Even a person who is not familiar with the operation of the information processing system of the present disclosure can perform a payment process by smoothly selecting a card used for payment from a plurality of (in particular, three or more types of) payment processing methods.

In addition to this, since the operator of the information processing system of the present disclosure can easily determine whether or not the information processing system is in a secure mode, it is possible to perform the input of the signature or PIN without worry. Therefore, the information processing system of the present disclosure can be safely used with less mistake of the operator.

An information processing system of the present disclosure includes a first information processing unit, a secure second information processing unit, a reading antenna capable of reading information from a non-contact type medium, and a reading unit to which the reading antenna is connected. The reading antenna is disposed on the first information processing unit side, and the reading unit is disposed on the second information processing unit side.

In the information processing system of the present disclosure, the first information processing unit may further include a first display unit, and the reading antenna may be disposed so as to surround the periphery of the first display unit.

In an information processing method of the present disclosure, the first information processing unit transmits a signal, which is received after the non-contact type medium is read by the reading antenna disposed in the first information processing unit, to the reading unit disposed in the secure second information processing unit.

In the information processing method of the present disclosure, prior to the reading of the non-contact type medium by the reading antenna, the first information processing unit may change the reading antenna into a state, in which the non-contact type medium can be read, through the reading unit disposed in the secure second information processing unit and then perform a display prompting the reading of the non-contact type medium using the first display unit disposed in the first information processing unit.

In the information processing method of the present disclosure, the reading unit disposed in the secure second information processing unit may decode and encode the signal received after the non-contact type medium is read by the reading antenna and transmit the encoded signal to the first information processing unit.

In the information processing method of the present disclosure, the first information processing unit may transmit the encoded signal, which has been received from the reading unit disposed in the secure second information processing unit, to an external device other than the first and second information processing units.

A computer program of the present disclosure causes an information processing system including a first information processing unit, a secure second information processing unit, a reading antenna disposed in the first information processing unit, and a reading unit disposed in the second information processing unit to transmit a signal, which is received after a non-contact type medium is read by the reading antenna, to the reading unit using the first information processing unit.

An information processing system of the present disclosure includes a first information processing unit and a secure second information processing unit. A payment execution unit is provided in the first information processing unit. A state display unit that indicates either a non-secure mode or a secure mode is provided in the second information processing unit.

In the information processing system of the present disclosure, the state display unit may be a secure display unit provided in the secure second information processing unit, and may indicate the secure mode using a region where authentication information (PIN or signature) of a medium used for payment is input.

In the information processing system of the present disclosure, the state display unit may be a secure display unit provided in the secure second information processing unit, and may indicate the secure mode using a surrounding region relatively close to the region where authentication information of a medium used for payment is input corresponding to the size of the secure display unit.

In the information processing system of the present disclosure, the state display unit may indicate the secure mode using a region where an operation for advancing the payment procedure after the input of authentication information of a medium used for payment is completed is performed.

In the information processing system of the present disclosure, the state display unit may indicate the secure mode using a surrounding region relatively close to the region where an operation for advancing the payment procedure corresponding to the size of the secure display unit after the input of authentication information of a medium used for payment is completed is performed.

A payment terminal device of the present disclosure includes: a first information processing unit that is housed in a housing, includes a display unit that displays information regarding payment including an amount, and has a non-secure execution environment; and a second information processing unit that is housed in the housing, includes an input unit to which authentication information indicating whether or not a card used for payment is held by a legitimate owner is input, and has a secure execution environment. A payment execution unit is provided in the first information processing unit, and a state display unit that indicates either a non-secure mode or a secure mode is provided in the second information processing unit. The state display unit indicates the secure mode by highlighting an input region of the input unit where the authentication information is input.

In the payment terminal device of the present disclosure, the state display unit may highlight the input region of the input unit until the authentication information is input without highlighting the input region of the input unit at the start of a payment process.

In an information processing method of the present disclosure, in a step in which payment execution means provided in a first information processing unit requires authentication of a medium used for payment, a secure second information processing unit performs a display enabling the input of authentication information of the medium used for payment, and a state display unit provided in the secure second information processing unit displays either a non-secure mode or a secure mode.

In the information processing method of the present disclosure, the state display unit may display the secure mode until an operation for advancing the payment procedure after the input of the authentication information is completed is performed from the display enabling the input of the authentication information of the medium used for payment.

A computer program of the present disclosure causes an information processing system including a first information processing unit and a secure second information processing unit, which includes a state display unit, to perform a display enabling the input of authentication information of a medium used for payment using the secure second information processing unit and to display either a non-secure mode or a secure mode using the state display unit provided in the secure second information processing unit in a step in which payment execution means provided in the first information processing unit requires authentication of the medium used for payment.

The computer program of the present disclosure may display the secure mode until an operation for advancing the payment procedure after the input of the authentication information is completed is performed from the display enabling the input of the authentication information of the medium used for payment.

The computer program described above is recorded on a recording medium of the present disclosure.

An information processing system of the present disclosure includes a non-contact type medium reading unit that can read a non-contact type medium, a contact type medium reading unit that can read a contact type medium, and a display unit that displays each reading position of the non-contact type medium reading unit or the contact type medium reading unit at a closer position than reading positions of other medium reading units after performing a display prompting the reading of the non-contact type medium or the contact type medium.

In the information processing system of the present disclosure, the display unit may end the display of the reading position after reading of the non-contact type medium by the non-contact type medium reading unit or reading of the contact type medium by the contact type medium reading unit is performed.

The information processing system of the present disclosure includes a non-contact type medium reading unit that can read information from a non-contact type medium and a contact type medium reading unit that can read information from a contact type medium, and may further include a display unit that performs a display for switching to a state, in which the non-contact type medium can be read by the non-contact type medium reading unit, in a state in which reading from the contact type medium by the contact type medium reading unit is allowed.

In the information processing system of the present disclosure, in a state in which reading from the contact type medium by the contact type medium reading unit is allowed, the display unit may display each reading position of the contact type medium reading unit at a closer position than reading positions of other medium reading units after performing a display prompting the reading of the non-contact type medium or the contact type medium.

In the information processing system of the present disclosure, in a state in which the non-contact type medium can be read by the non-contact type medium reading unit, reading from the contact type medium by the contact type medium reading unit may be allowed.

A mobile payment terminal device of the present disclosure includes: a housing having an upper surface portion and a side surface portion; an input display unit which is housed in the housing and displays information regarding payment including an amount and performs a display prompting an operation of reading a medium used for payment and to which authentication information of a card used for payment is input; a non-contact type medium reading unit that is provided in the upper surface portion of the housing and that reads a non-contact type medium used for payment; and a contact type medium reading unit that is provided in the upper end side surface portion of the housing when viewed from an upright direction of characters displayed in a region where the authentication information is input in the input display unit and that reads a contact type medium used for payment. The input display unit displays each reading position of the non-contact type medium reading unit and the contact type medium reading unit at a closer position than reading positions of other medium reading units.

Alternatively, a mobile payment terminal device of the present disclosure includes: a housing having an upper surface portion and a side surface portion; an input display unit which is housed in the housing and displays information regarding payment including an amount and performs a display prompting an operation of reading a medium used for payment and to which authentication information of a card used for payment is input; a first contact type medium reading unit that is provided in the upper end side surface portion of the housing when viewed from an upright direction of characters displayed in a region where the authentication information is input in the input display unit and that reads a first contact type medium used for payment; and a second contact type medium reading unit that is provided in the side surface portion of the housing excluding the upper end side surface portion and that reads a second contact type medium used for payment. The input display unit displays each reading position of the first contact type medium reading unit or the second contact type medium reading unit at a closer position than reading positions of other medium reading units.

In the mobile payment terminal device of the present disclosure, the contact type medium reading unit may be disposed on the opposite side to one side of the housing close to the region where the authentication information is input in the input display unit.

In the mobile payment terminal device of the present disclosure, the first contact type medium reading unit may be disposed on the opposite side to one side of the housing close to the region where the authentication information is input in the input display unit, and the second contact type medium reading unit may be disposed on the one side of the housing close to the region where the authentication information is input in the input display unit.

In the mobile payment terminal device of the present disclosure, the input display unit may include a first input display unit that displays information regarding payment including an amount and performs a display prompting an operation of reading a medium used for payment and a second input display unit to which the authentication information is input. The first and second input display units may display each reading position of the non-contact type medium reading unit and the contact type medium reading unit at a closer position than reading positions of other medium reading units.

In the mobile payment terminal device of the present disclosure, the input display unit may include a first input display unit that displays information regarding payment including an amount and performs a display prompting an operation of reading a medium used for payment and a second input display unit to which the authentication information is input. The first and second input display units may display each reading position of the contact type medium reading unit at a closer position than reading positions of other medium reading units.

In the mobile payment terminal device of the present disclosure, the input display unit may end the display of the reading position after reading of the non-contact type medium by the non-contact type medium reading unit or reading of the contact type medium by the contact type medium reading unit is performed.

In the information processing method of the present disclosure, the display unit displays each reading position of the non-contact type medium reading unit or the contact type medium reading unit at a closer position than reading positions of other medium reading units after performing a display prompting the reading of the non-contact type medium or the contact type medium.

In the information processing method of the present disclosure, the display unit may end the display of the reading position after reading of the non-contact type medium by the non-contact type medium reading unit or reading of the contact type medium by the contact type medium reading unit is performed.

In the information processing method of the present disclosure, the display unit may perform a display for switching to a state, in which the non-contact type medium can be read by the non-contact type medium reading unit, in a state in which reading from the contact type medium by the contact type medium reading unit is allowed.

A computer program of the present disclosure causes an information processing system including a display unit, a non-contact type medium reading unit that can read a non-contact type medium, and a contact type medium reading unit that can read a contact type medium to display each reading position of the non-contact type medium reading unit or the contact type medium reading unit at a closer position than reading positions of other medium reading units after performing a display prompting the reading of the non-contact type medium or the contact type medium using the display unit.

The computer program of the present disclosure may end the display of the reading position using the display unit after reading of the non-contact type medium by the non-contact type medium reading unit or reading of the contact type medium by the contact type medium reading unit is performed.

The computer program of the present disclosure may cause an information processing system including a display unit, a non-contact type medium reading unit that can read information from a non-contact type medium, and a contact type medium reading unit that can read information from a contact type medium to perform a display for switching to a state, in which the non-contact type medium can be read by the non-contact type medium reading unit, using the display unit in a state in which reading from the contact type medium by the contact type medium reading unit is allowed.

The computer program described above is recorded on a recording medium of the present disclosure.

## Claims

1. A mobile payment terminal device, comprising:
a display unit that performs a display prompting an operation of reading a medium;
a reading unit that reads the medium;
a secure input unit that enables an input of authentication information required for authentication of the medium; and
a secure display unit that performs a display, which enables an input of the authentication information required for authentication of the medium through the secure input unit, in association with an input through the secure input unit.

2. The mobile payment terminal device of Claim 1,
wherein the secure display unit performs switching between a plurality of display contents corresponding to authentication methods of the medium.

3. The mobile payment terminal device of Claim 1,
wherein the mobile payment terminal device is formed by a first information processing device including the display unit and a second information processing device that is able to be combined with the first information processing device and includes the secure input unit and the secure display unit.

4. A mobile payment terminal device, comprising:
a non-secure information processing unit including a display unit that is housed in a housing and that displays information regarding payment including an amount and performs a display prompting an operation of reading a medium used for payment;
a reading unit that reads the medium;
a secure input unit that enables an input of authentication information used for payment; and
a secure display unit that performs a display, which enables an input of the authentication information required for authentication of the medium through the secure input unit, in association with an input through the secure input unit,
wherein the authentication information corresponding to a plurality of different authentication methods is input through the secure input unit.

5. The mobile payment terminal device of Claim 4,
wherein the secure display unit performs switching between a plurality of display contents corresponding to authentication methods of the medium.

6. The mobile payment terminal device of Claim 4,
wherein the authentication information is a PIN number or a signature that is used to authenticate whether or not a card used for payment is held by a legitimate owner.
